# EUROPÄISCHE PATENTSCHRIFT

(11) **EP 2 457 728 B1**
(45) Veröffentlichungstag und Bekanntmachung des Hinweises auf die Patenterteilung: **31.07.2013**
(21) Anmeldenummer: 11008212.0
(22) Anmeldetag: 11.10.2011
(51) Int. Cl.: B32B 37/10, B32B 37/18

(54) **Verfahren zum Laminieren von im wesentlichen plattenförmigen Werkstücken**
Method for laminating substantially board-shaped workpieces
Procédé de laminage de pièces essentiellement en forme de plaques

(30) Priorität: 30.11.2010 DE 102010052780
(43) Veröffentlichungstag der Anmeldung: 30.05.2012
(73) Patentinhaber: Robert Bürkle GmbH, 72250 Freudenstadt (DE)
(72) Erfinder: Damm, Norbert, 76689 Karldorf-Neustadt (DE)
(74) Vertreter: Lemcke, Brommer & Partner

(56) Entgegenhaltungen:
- WO-A1-94/29106
- DE-A1- 2 006 655
- DE-A1- 3 044 717
- DE-A1- 3 315 331
- DE-A1-102008 030 927

## Beschreibung

Die Erfindung betrifft ein Verfahren zum Laminieren von Photovoltaik-Modulen und dergleichen im wesentlichen plattenförmigen Werkstücken, die mindestens eine wärmeaktivierbare Kleberschicht enthalten, unter Druck- und Wärmeeinwirkung, nach dem Oberbegriff des Anspruchs 1.

Bei einem solchen Verfahren wird üblicherweise eine einetagige oder mehretagige Vakuum-Laminierpresse mit einer oder, im mehretagigen Fall, mehreren Vakuumkammern verwendet. Die Vakuumkammer wird durch eine obere und untere Kammerhälfte gebildet, die relativ zueinander bewegbar sind, um die Vakuumkammer zu öffnen und zu schließen. Sie wird durch ein Andrückmittel gasdicht unterteilt, wobei das Andrückmittel mittels Druckunterschieden innerhalb der Vakuumkammer heb- und senkbar ist.

Üblicherweise handelt es sich bei diesem Andrückmittel um eine flexible Membran, die die Vakuumkammer in einen zur Aufnahme von mindestens einem Werkstück vorgesehenen, evakuierbaren Produktraum und einen evakuierbaren und/oder druckbeaufschlagbaren Druckraum unterteilt. Aufgrund eines durch Evakuieren des Produktraums und/oder durch Druckbeaufschlagen des Druckraums erzeugten Druckunterschieds in der Vakuumkammer wird die flexible Membran gegen das Werkstück gepresst, wodurch sie das Werkstück direkt oder indirekt gegen eine die Vakuumkammer begrenzende Platte drückt - im Normalfall die Unterseite der Vakuumkammer, wobei gegebenenfalls noch ein Förderband zwischen der Platte und dem Werkstück verläuft - und hierdurch die zum Laminieren notwendige Auflast auf das Werkstück aufbringt. In der Regel wird diese Platte, meist also die Unterseite der Vakuumkammer, durch eine Heizplatte gebildet, so dass die zum Laminieren notwendige Prozesswärme direkt beim Pressvorgang in das Werkstück eingeleitet wird.

Bei einem Verfahren der vorliegenden Art wird ein Werkstück, insbesondere ein Photovoltaik-Modul, oder mehrere Werkstücke gleichzeitig - der Einfachheit halber wird im folgenden jeweils nur von einem Werkstück gesprochen - in die Vakuumkammer der verwendeten Vakuum-Laminierpresse eingebracht und die Vakuumkammer geschlossen. Sodann wird die Vakuumkammer evakulert, und das Andrückmittel wird durch Belüften und/oder Druckbeaufschlagen desjenigen Teils der Vakuumkammer, in dem sich kein Werkstück befindet, gegen das Werkstück und dieses hierdurch direkt oder indirekt gegen eine die Vakuumkammer begrenzende Platte gedrückt. Diese Platte ist normalerweise die Unterseite der Vakuumkammer.

Die für den Laminiervorgang notwendige Prozesswärme wird üblicherweise dadurch in das Werkstück eingebracht, dass die Unterseite der Vakuumkammer als Heizplatte ausgebildet ist, gegen die das Werkstück vom Andrückmittel gedrückt wird. Der Druck und die Prozesswärme sorgen dann zusammen für das Erweichen bzw. AKtivieren der Kleberschicht und gegebenenfalls für deren Aushärten bzw. Vernetzen. Es sind allerdings auch andere Arten des Einbringens der Prozesswärme denkbar.

Üblicherweise erfolgt das Evakuieren der Vakuumkammer solcherart, dass zunächst der oberhalb des Andrückmittels liegende Druckraum der Vakuumkammer evakuiert wird, um das Andrückmittel nach oben zur oberen Kammerhälfte zu ziehen. Danach, üblicherweise mit einem gewissen Zeitversatz, wird auch der unterhalb des Andrückmittels liegende, das Werkstück enthaltende Produktraum evakuiert, wobei das Evakuieren beider Räume der Vakuumkammer so geregelt wird, dass immer ein Differenzdruck zwischen dem Druckraum und dem Produktraum bestehen bleibt, der das Andrückmittel in der oberen Kammerhälfte hält und verhindert, dass das Andrückmittel vorzeitig In Kontakt mit dem Werkstück gelangt.

Wenn der Produktraum der Vakuumkammer bis zu einem Solldruck evakuiert worden ist, der in der Regel unterhalb von einem Millibar liegt, wird der Druckraum belüftet, so dass sich die Druckdifferenz zwischen dem Druckraum und dem Produktraum umkehrt und sich das Andrückmittel auf das Werkstück auflegt. Durch Regeln des Gasdrucks im Druckraum wird sodann ein gewünschter Anpressdruck des Andrückmittels eingestellt, um die für das Laminieren notwendige Auflast auf das Werkstück zu erzeugen.

Hierbei soll nach dem bisherigen Stand der Technik insbesondere der Produktraum der Vakuumkammer rasch evakuiert werden, und zwar noch vor einem nennenswerten Erwärmen des Werkstücks, und jedenfalls vor der Aktivierung der adhäsiven Wirkung der Kleberschicht. Hierdurch wird ermöglicht, dass etwaige Lufteinschlüsse (Legeluft zwischen den Werkstückschichten) oder gegebenenfalls beim Erwärmen gebildete Gase aus dem Werkstück herausgezogen werden, bevor ein Härten bzw. Vernetzen des Klebers in der Kleberschicht beginnt. Denn Gasblasen im fertig laminierten Werkstück beeinträchtigen dessen Lebensdauer ganz erheblich oder führen Im ungünstigsten Fall zur sofortigen Unbrauchbarkeit des Werkstücks, also zur Produktion von Ausschuse. In besonderem Maße gilt dies für Photovoltaik-Module.,

In der WO 94/29106 A1 ist ein Verfahren zum Laminieren von Photovoltaik-Modulen mit aushärtbaren Kleberschichten unter Druck- und Wärmeeinwirkung beschrieben. Hierbei kommt eine Vakuum-Laminierpresse zum Einsatz, in der eine Membran als flexibles Andrückmittel angeordnet ist, die eine Vakuumkammer in eine Produkthälfte und eine Druckhälfte unterteilt. Die Prozesswärme wird mittels einer Heizplatte in das Photovoltaik-Modul eingebracht, die indirekt, durch eine Trägerplatte hindurch, auf das Werkstück einwirkt. Nach Schließen der Vakuumkammer wird diese rasch evakuiert, um Legeluft und sonstige Gase aus dem Photovoltaik-Modul herauszuziehen, bevor dieses nennenswert erwärmt wird. Danach wird die oberhalb der Membran liegende Druckhälfte der Vakuumkammer belüftet, so dass die Membran durch den gebildeten Druckunterschied eine Auflast auf das Werkstück aufbringt und insbesondere auch den Wärmeübergang von der Heizplatte in das Werkstück in Gang setzt bzw. beschleunigt.

In der WO 94/29106 A1 werden die Photovoltaik-Module in der Vakuum-Laminierpresse lediglich vorlaminiert, dann die Vakuumkammer ohne einen Abkühlprozess geöffnet, die vorlaminierten Werkstücke in einen Aushärteofen überführt und dort die Kleberschichten bei hohen Temperaturen ausgehärtet. Hierbei macht man sich zunutze, dass die in Photovoltaik-Modulen üblicherweise verwendeten Kleberschichten bereits nach Beginn des Aushärtens bzw. Vernetzens eine solch hohe Adhäsivwirkung entwickeln, dass ein Eindringen von Luft von außerhalb des Werkstücks zwischen dessen einzelne Schichten schon zu einem früheren Zeitpunkt nicht mehr zu befürchtet ist und das weitere Laminieren demnach nicht mehr unter Vakuum erfolgen muss. Wenn die Werkstücke nicht bis zum vollständigen Aushärten bzw. Vernetzen der Kleberschichten in der Vakuum-Laminierpresse verbleiben müssen, sondern das weitere Aushärten bzw. Vernetzen im Aushärteofen erfolgen kann, kann die Taktzahl der Vakuum-Laminierpresse und somit die Verarbeitungsgeschwindigkeit der gesamten Anlage erhöht werden.

Ausgehend von diesem Stand der Technik liegt der vorliegenden Erfindung die Aufgabe zugrunde, durch Verbesserung der oben beschriebenen, bekannten Verfahrensweisen bessere Arbeitsergebnisse zu erzielen und/oder noch kürzere Taktzeiten in der Vakuum-Laminierpresse zu ermöglichen.

Gelöst ist diese Aufgabe durch ein Verfahren mit den Merkmalen des Anspruchs 1. Bevorzugte Weiterbildungen des erfindungsgemäßen Verfahrens sind in den Ansprüchen 2 bis 10 niedergelegt.

Das Verfahren nach der vorliegenden Erfindung unterscheidet sich von der bisherlgen Verfahrensweise also ganz wesentlich dadurch, dass das Werkstück nach dem Einbringen in die Vakuumkammer zunächst vom Andrückmittel mit einer geringen Auflast von ca. 2 % bis ca. 10 % der Prozessauflast beaufschlagt wird, was vorzugsweise einer spezifischen Flächenlast von ca. 20 mbar bis ca.

200 mbar und weiter bevorzugt von ca. 50 mbar bis ca. 100 mbar entspricht. Hierbei wird das Werkstück auf einer Temperatur unterhalb der Aktivierungstemperatur der Kleberschicht gehalten. Danach wird die geringe Auflast wieder vom Werkstück weggenommen. Erst dann wird das Werkstück bis zur Aktivierungstemperatur der Kleberschicht erwärmt und das Werkstück mittels des Andrückmittels mit der Prozessauflast beaufschlagt. Zweckmäßigerweise drückt das Andrückmittel zunächst das Werkstück gegen eine Heizplatte, wodurch das Werkstück dann schnell erwärmt wird und dessen Kleberschicht die Aktivierungstemperatur rasch erreicht.

Im Rahmen der vorliegenden Erfindung ist es bevorzugt, das Werkstück vor dem Aufbringen oder während des Aufbringens der geringen Auflast auf eine Vorwärmtemperatur zu erwärmen, bei der die Kleberschicht erweicht, die jedoch unterhalb der Aktivierungstemperatur der Kleberschicht liegt. Dieses Vorwärmen kann durch das Aufbringen der geringen Auflast bewirkt werden, da hierdurch das Werkstück vorzugsweise gegen eine Heizplatte gepresst wird, was einen guten Wärmeübergang von der Heizplatte in das Werkstück ermöglicht. Es ist im Rahmen der vorliegenden Erfindung jedoch auch möglich, das Werkstück noch vor dessen Einbringen in die Vakuumkammer auf die Vorwärmtemperatur zu erwärmen. Dies kann helfen, die Taktzeiten der Vakuum-Laminierpresse zu verkürzen, da die Wärmeenergie, die schon vorher in das Werkstück eingebracht worden ist, nicht mehr in der Vakuumkammer in das Werkstück eingebracht werden muss.

Erfindungsgemäß ist erkannt worden, dass die signifikante Gasmenge, die aus herkömmlichen Kleberschichten, wie insbesondere Ethylenvinylacetatfolien (EVA-Folien) beim Evakuieren ausgast, und die man nach bisherigem Stand der Technik unbedingt zuerst absaugen will, bevor die Kleberschicht nennenswert erweicht und eine beginnende Adhäsivwirkung aufweist, zu einem großen Teil nur deswegen aus der Kleberschicht ausgast, weil der Umgebungsdruck durch das Evakuieren stark erniedrigt ist. Das Evakuieren nach dem Stand der Technik erzeugt also zu einem Großteil diejenigen Gase, die durch das Evakuieren abgesaugt werden sollen, um keine schädlichen Wirkungen zu entfalten, selbst. Durch das erfindungsgemäße Belasten des Werkstücks mit einer geringen Auflast kann die Vakuumkammer evakuiert werden, ohne das Ausgasen von Prozessgasen aus der Kleberschicht hervorzurufen. Denn durch die geringe Auflast bleiben diese Prozessgase in der Kleberschicht in Lösung, selbst wenn das Werkstück, wie nach einer bevorzugten Ausführung der vorliegenden Erfindung vorgeschlagen, bereits bis zum Erweichen der Kleberschicht vorerwärmt wurde oder beim Aufbringen der geringen Auflast vorerwärmt wird.

Das Ausgasen und Absaugen von Gasen aus der Kleberschicht nach dem Stand der Technik kann zudem sogar nachteilig sein, denn oft enthalten die Kleberschichten Additive, deren Verbleib in der Kleberschicht erwünscht ist. Bei Verwendung von EVA als Adhäsivstoff werden beispielsweise Peroxide als Reaktant für die Polymerreaktion zur erwünschten Vernetzung verwendet. Bei Thermoplasten als Kleberschichten sind Weichmacher und Haftvermittler als flüchtige Additive zugesetzt die ebenfalls nicht abgesaugt werden sollten. Die geringe Auflast hält nicht nur die flüchtigen Inhaltsstoffe der Kleberschichten von insbesondere üblichen Photovoltaik-Modulen in Lösung und hindert sie am Ausgasen, sondern sie stellt darüber hinaus sicher, dass bereits gasförmig vorhandene Legeluft zwischen den einzelnen Schichten des Werkstücks, insbesondere eines Photovoltaik-Moduls, aus dem Werkstück seitlich herausgedrückt und durch Evakuieren der Vakuumkammer abgesaugt werden kann. Dies funktioniert überraschenderweise auch dann, wenn das Werkstück bereits so weit vorerwärmt ist, dass die Kleberschicht erweicht und die Adhäsivwirkung beginnt.

Im Rahmen der vorliegenden Erfindung kann die Vakuumkammer bereits vor dem Aufbringen der geringen Auflast auf das Werkstück oder auch während des Aufbringens dieser geringen Auflast evakuiert werden. Wie beschrieben, verhindert die erfindungsgemäße geringe Auflast das Erzeugen von Ausgasungen aus der Kleberschicht sogar dann, wenn das Werkstück auf die Vorwärmtemperatur vorgewärmt worden ist oder wird. Sonstige im Werkstück noch vorhandenen Gase, wie insbesondere Legeluft, werden gleichwohl zuverlässig abgesaugt. Hierdurch verringert sich die Blasenbildung im Werkstück signifikant und die Arbeitsergebnisse des erfindungsgemäßen Verfahrens sind besser als diejenigen eines Verfahrens nach dem bisherigen Stand der Technik.

Es hat sich herausgestellt, dass es zweckmäßig ist, die Vakuumkammer vor dem Aufbringen oder während des Aufbringens der geringen Auflast auf das Werkstück nur bis auf ein Vorvakuum zu evakuieren, das beispielsweise bis ca. 150 mbar und vorzugsweise bis etwa 5 mbar reicht, und die Vakuumkammer erst nach dem Wegnehmen der geringen Auflast vom Werkstück vollständig zu evakuieren, insbesondere unter 1 mbar, bevor das Andrückmittel die Prozessauflast auf das Werkstück aufbringt und der eigentliche Laminierprozess beginnt.

Die Prozessauflast kann im Rahmen der vorliegenden Erfindung auf das Werkstück aufgebracht werden, sobald dessen Kleberschicht eine Temperatur von ca. 70 % bis ca. 100 % der Aktivierungstemperatur erreicht hat. Denn es ist erkannt worden, dass die Kleberschicht schon dann, wenn erst ca. 70 % der Aktivierungstemperatur erreicht sind, in einen zähflüssigen Aggregatzustand gerät, der den mechanischen Druck allseits gleich verteilt. Die in Photovoltaik-Modulen üblicherweise verwendeten Silizium-Solarzellen sind höchst bruchempfindlich. Wenn ein Photovollaik-Modul mit einer Silizium-Solarzellenschicht mit einer Auflast beaufschlagt wird, solange die Kleberschicht noch nicht erweicht ist, führt dies unweigerlich zum Zerbrechen der Solarzellen. Jedoch dann, wenn die Kleberschicht erweicht und die Solarzellen dementsprechend in einer niedrigviskosen Masse eingebettet sind, kann die zum Laminieren erforderliche Auflast ohne Gefahr eines Bruchs von Solarzellen auf das Modul aufgebracht werden.

In diesem Zusammenhang hat sich überraschenderweise herausgestellt, dass bei Verwendung von genügend Klebermaterial, um die Solarzellenschicht vollständig in eine beim Laminiervorgang flüssige Masse zu betten, selbst Silizium-Solarzellen auch dann nicht zerbrechen, wenn eine deutlich höhere Prozessauflast gewählt wird, wie dies im Stand der Technik üblich ist. Im Stand der Technik erfolgt das Laminieren in der Vakuum-Laminierpresse bei einer spezifischen Flächenlast von etwa dem Umgebungsdruck, also in der Regel um ca. 1000 mbar. Im Rahmen der vorliegenden Erfindung ist es nun bevorzugt, eine Prozessauflast mit einem spezifischen Flächendruck über dem Umgebungsdruck, also über ca. 1020 mbar, und zwar vorzugsweise über ca. 1500 mbar bis ca. 2000 mbar, zu laminieren. Dies erfolgt dadurch, dass derjenige Teil der durch das Andrückmittel gasdicht unterteilten Vakuumkammer, in dem sich kein Werkstück befindet, nicht nur belüftet, sondern gezielt mit einem Überdruck druckbeaufschlagt wird.

Hierbei ist erfindungsgemäß erkannt worden, dass sich durch die erhöhte Prozessauflast nicht nur die Vernetzungs- bzw. Aushärtegeschwindigkeit erhöht, sondern dass hierdurch auch Prozessgase, die aufgrund der hohen Temperaturen in der Kleberschicht entstehen, sowie sogar etwa noch vorhandene Legeluft in der aushärtenden bzw. vernetzenden Kleberschicht In Lösung gehalten oder in Lösung gebracht werden, was die Bildung von nachteiligen Blasen im Werkstück noch effektiver als im bisherigen Stand der Technik verhindert. Die Maßnahme der gegenüber dem Stand der Technik deutlich erhöhten Auflast verbessert also zum einen wiederum die Arbeitsergebnisse und verkürzt zum anderen die Taktzeit nochmals erheblich.

Eine bevorzugte Weiterbildung des erfindungsgemäßen Verfahrens besteht darin, das erfindungsgemäß vorerwärmte Werkstück unter voll hergestelltem Vakuum in der Vakuumkammer und bei einer Prozesstemperatur, die über der Aktivierungstemperatur der verwendeten Kleberschicht liegt und vorzugsweise über ca. 110 °C und weiter bevorzugt über 120 °C liegt, sowie unter Einwirken einer Prozessauflast, die mindestens einer spezifischen Flächenlast von ca. 900 mbar bis ca. 1000 mbar, vorzugsweise jedoch über 1020 mbar bis ca. 2000 mbar entspricht, zu laminieren, diesen Laminierprozess nach Herstellen einer ersten, das Werkstück luftdicht einkapselnden adhäsiven Wirkung der Kleberschicht zu unterbrechen, dann das Werkstück in einen nachgeschalteten Laminator zu verbringen und dort unter Prozesstemperatur und gleicher oder erhöhter Prozessauflast weiter zu laminieren.

Wenn das erfindungsgemäße Aufbringen einer geringen Auflast schon bei Evakuieren der Vakuumkammer mit einem Vorwärmen des Werkstücks kombiniert wird, wobei das Vorwärmen außerhalb der Vakuumkammer, oder aber vorzugsweise beim Aufbringen der geringen Auflast erfolgt, wird die Taktzeit des Laminiervorgangs in der Vakuum-Laminierpresse vorteilhaft verkürzt. Wie erwähnt, kann dies noch dadurch unterstützt werden, indem eine deutlich höhere Prozessauflast als nach dem Stand der Technik üblich gewählt wird. Diese kann bei vorerwärmten Werkstücken zudem früher auf das Werkstück einwirken, als dies bislang möglich war, ohne im Hauptanwendungsfall des erfindungsgemäßen Verfahrens, dem Laminieren von Photovoltaik-Modulen, einen Bruch der Solarzellen zu riskieren.

Diese verkürzte Taktzeit in der Vakuum-Laminierpresse wird dann optimal zur Verkürzung der gesamten Laminierzeit genutzt, wenn der Laminierprozess nach Herstellen einer luftdichten Einkapselung des Werkstücks unterbrochen und das Werkstück in einen nachgeschalteten Laminator verbracht wird, um dort unter Prozesstemperatur und Prozessauflast weiter laminiert zu werden.

Nach einer weiter bevorzugten Ausgestaltung des erfindungsgemäßen Verfahrens muss auch der Laminierprozess im nachgeschalteten Laminator mit erhöhter Auflast nicht so lange dauern, bis die Kleberschicht vollständig ausgehärtet bzw. vernetzt ist. Vielmehr kann auch dieser Prozess unterbrochen und die noch nicht fertig laminierten Werkstücke in einen an sich bekannten Aushärteofen verbracht werden, wo sie dann noch vollständig aushärten bzw. vernetzen. Auf diese Weise kann die sehr kurze, erfindungsgemäß mögliche Taktzeit in der Vakuum-Laminierpresse auch im nachgeschalteten Laminator beibehalten werden, wodurch der gesamte Prozess sehr viel schneller wird.

Um die Prozessgeschwindigkeit nochmals zu erhöhen, können, wie an sich bekannt, zum Schluss dann noch Kühlstationen vorgesehen sein, in denen die Werkstücke taktweise abgekühlt werden, nachdem der Laminierprozess vollständig durchgeführt ist.

Im folgenden soll ein Ausführungsbeispiel für ein erfindungsgemäßes Verfahren näher beschrieben und erläutert werden.

Ein Photovoltalk-Modul, bestehend aus einem Deckglas, einer Schicht aus miteinander verschalteten Silizium-Solarzellen und einer Rückseitenfolie sowie jeweils einer zwischen Deckglas und Solarzellenschicht bzw. Solarzellenschicht und Rückseitenfolie eingelegten EVA-Folie als wärmeaktivierbarer Kleberschicht wurde mit einem erfindungsgemäß ausgestalteten Verfahren laminiert.

Zunächst wurden die genannten Schichten aufeinander gelegt und dieser Schichtenstapel in die Vakuumkammer einer Vakuum-Laminierpresse verbracht. Diese herkömmlich ausgebildete Vakuum-Laminierpresse enthielt eine Vakuumkammer mit einer unteren Kammerhälfte und einer heb- und senkbaren oberen Kammerhälfte, wobei die untere Kammerhälfte im wesentlichen durch eine Heizplatte gebildet war. An der oberen Kammerhälfte war ein Membranrahmen mit sowohl zur oberen Kammerhälfte als auch zur unteren Kammerhälfte abdichtenden, umlaufenden Dichtungen angeordnet, und über diesen Membranrahmen war eine flexible Silikenmembran als Andrückmittel gespannt. Das noch aus einem Schichtstapel bestehende Werkstück wurde auf einem Förderband, das zwischen der oberen und der unteren Kammerhälfte durch die Vakuumkammer lief, in die Vakuumkammer eingebracht. Dieser Verfahrensschritt dauerte ca. 30 Sekunden.

Sodann wurde die Vakuum-Laminierpresse geschlossen und das Werkstück durch Auflegen der Membran und Erzeugen einer geringen Auflast von ca. 100 mbar aufgrund des hierdurch entstehenden Kontakts zwischen dem Werkstück und der Heizplatte auf eine Vorwärmtemperatur von ca. 100 °C vorerwärmt. Diese Vorwärmphase dauerte wiederum ca. 30 Sekunden, wobei gleichzeitig der Produktraum zwischen der Membran und der Heizplatte, in dem sich das Werkstück und das Förderband befand, bis auf einen Gasdruck von ca. 5 mbar evakuiert wurde.

Nach diesen weiteren 30 Sekunden Vorwärmphase wurde die Membran vom Werkstück abgehoben, so dass auch der Wärmeübergang von der Heizplatte in das Werkstück stark verlangsamt wurde, und der Produktraum auf das zum Laminieren notwendige Vakuum von unterhalb 1 mbar evakuiert. Dieses Evakuieren dauerte ca. 90 Sekunden, wobei die Temperatur des Werkstücks aufgrund von Strahlungswärmeeffekten und geringen Wärmeleitungseffekten von ca. 100 °C (Vorwärmtemperatur) auf ca. 120 °C anstieg.

Da bei einer Temperatur von 120 °C bereits die Aktivierungstemperatur der EVA-Folie erreicht war, begann sofort anschließend der eigentliche Laminierprozess, indem die Membran wieder auf das Werkstück aufgelegt und der Druckraum oberhalb der Membran belüftet wurde, so dass die Membran eine spezifische Flächenlast von knapp über 1000 mbar als Prozessauflast auf das Werkstück ausübte. Hierbei stieg auch die Prozesstemperatur im Werkstück bis auf 150 °C an. Dieses Laminieren des Werkstücks unter einer Prozessauflast von knapp über 1000 mbar und einer Prozesstemperatur von ca. 150 °C wurde über eine Zeitdauer von ca. 60 Sekunden durchgeführt, so dass sich bis hier ein erster Arbeitstakt von insgesamt ca. 3,5 Minuten Dauer ergab.

Nach Ablauf dieser Zeitdauer wurde der Laminiervorgang unterbrochen, indem die Vakuumkammer der Vakuum-Laminierpresse vollständig belüftet und die Presse geöffnet wurde. Darauf folgte ein Transfer in einen nachgeschalteten Laminator innerhalb von ca. 30 Sekunden, so dass sich die Temperatur des Werkstücks nicht signifikant verringerte. Nach Schließen des Laminators, in welchem das Werkstück weiterhin auf einer Prozesstemperatur von ca. 150 °C gehalten wurde, wurde das Werkstück dort mit einer erhöhten Auflast von bis zu 2000 mbar beaufschlagt. Der Druckaufbau erfolgte hierbei innerhalb von ca. 30 Sekunden, und die erhöhte Auflast sowie das Einwirken der Prozesstemperatur wurde für die Dauer von etwa 3 Minuten gehalten.

Nach Ablauf dieses zweiten Arbeitstakts von wiederum ca. 3,5 Minuten wurde der Laminator geöffnet und das Werkstück, wiederum innerhalb von ca. 30 Sekunden um ein Abkühlen zu verhindern, in einen Aushärteofen verbracht, wo es drucklos bei Prozesstemperatur gehalten wurde, um den Laminiervorgang abzuschließen. Dies dauerte wiederum ca. 3,5 Minuten.

Bei diesem Ausführungsbeispiel des erfindungsgemäßen Verfahrens handelt es sich also um einen Prozess mit ultrakurzen Prozesstakten von ca. 3,5 Minuten in drei Prozessschritten. Wenn man die Prozessschritte jeweils in mehretagigen Laminatoren durchführt, ergibt sich eine sehr hohe Durchsatzkapazität. In Versuchsreihen der Anmelderin wurden Photovoltaik-Module mit monokristallinen Silizium-Solarzellen im beschriebenen Verfahren blasenfrei und versatzfrei sowie ohne Bruch von Solarzellen laminiert.

## Patentansprüche

1. Verfahren zum Laminieren von im wesentlichen plattenförmigen Werkstücken mit mindestens einer wärmeaktiverbaren Kleberschicht unter Druck- und Wärmeeinwirkung, insbesondere von Photovoltaik-Modulen, wobei ein oder mehrere Werkstücke in eine Vakuumkammer einer Vakuum-Laminierpresse mit einem die Vakuumkammer gasdicht unterteilenden, mittels Druckunterschieden heb- und senkbaren Andrückmittel eingebracht werden, die Vakuumkammer evakuiert wird, und das Andrückmittel durch Belüften und/oder Druckbeaufschlagen desjenigen Teils der Vakuumkammer, in dem sich kein Werkstück befindet, gegen das Werkstück und dieses hierdurch direkt oder indirekt gegen eine Platte gedrückt wird, die eine obere und eine untere Seite der Vakuumkammer bildet, wobei Prozesswärme in das Werkstück eingebracht wird, mittels welcher die Kleberschicht erwärmt wird sowie hierdurch erweicht und bei Erreichen einer Aktivierungstemperatur unter Einwirken einer definierten Prozessauflast des Andrückmittels aktiviert wird,
**dadurch gekennzeichnet,**
**dass** das Werkstück nach dem Einbringen in die Vakuumkammer zunächst vom Andrückmittel mit einer geringen Auflast von ca. 2 % bis ca. 10 % der definierten Prozessauflast beaufschlagt wird, wobei das Werkstück gleichzeitig unterhalb der Aktivierungstemperatur der Kleberschicht gehalten wird, dass danach die geringe Auflast vom Werkstück weggenommen und dass dann das Werkstück bis zur Aktivierungstemperatur der Kleberschicht erwärmt und mittels des Andrückmittels mit der Prozessauflast beaufschlagt wird.

2. Verfahren nach Anspruch 1,
**dadurch gekennzeichnet,**
**dass** das Werkstück vor dem Aufbringen oder während des Aufbringens der geringen Auflast auf eine Vorwärmtemperatur erwärmt wird, bei der die Kleberschicht erweicht, die jedoch unterhalb der Aktivierungstemperatur der Kleberschicht liegt.

3. Verfahren nach Anspruch 2,
**dadurch gekennzeichnet,**
**dass** das Erwärmen so durchgeführt wird, dass die Kleberschicht im Werkstück auf eine Vorwärmtemperatur von ca. 80 °C bis ca. 120 °C, vorzugsweise von ca. 80 °C bis ca. 100 °C gebracht wird.

4. Verfahren nach mindestens einem der Ansprüche 1 bis 3;
**dadurch gekennzeichnet,**
**dass** die Vakuumkammer vor dem Aufbringen oder während des Aufbringens der geringen Auflast auf das Werkstück evakuiert wird.

5. Verfahren nach Anspruch 4,
**dadurch gekennzeichnet,**
**dass** die Vakuumkammer vor dem Aufbringen oder während des Aufbringens der geringen Auflast nur bis auf ein Vorvakuum evakuiert wird und die Vakuumkammer erst nach Wegnehmen der geringen Auflast vom Werkstück vollständig evakuiert wird, bevor das Andrückmittel die Prozessauflast auf das Werkstück aufbringt.

6. Verfahren nach mindestens einem der Ansprüche 1 bis 5,
**dadurch gekennzeichnet,**
**dass** das Werkstück bei einer Prozessauflast mit einem spezifischen Flächendruck von über 1020 mbar, vorzugsweise über 1500 mbar bis ca. 2000 mbar laminiert wird.

7. Verfahren nach Anspruch 6,
**dadurch gekennzeichnet,**
**dass** die Prozessauflast auf das Werkstück aufgebracht wird, wenn dessen Kleberschicht eine Temperatur von ca. 70 % bis ca. 100 % von deren Aktivierungstemperatur erreicht hat.

8. Verfahren nach mindestens einem der Ansprüche 1 bis 7,
**dadurch gekennzeichnet,**
**dass** das Laminieren des Werkstücks in der Vakuum-Laminierpresse nach Herstellen einer ersten, das Werkstück luftdicht einkapselnden adhäsiven Wirkung der Kleberschicht unterbrochen und das Werkstück in einem nachgeschalteten Laminator verbracht und dort bei einer Temperatur an oder über der Aktivierungstemperatur der Kleberschicht sowie unter Prozessauflast oder einer erhöhten Auflast weiter laminiert wird.

9. Verfahren nach Anspruch 8,
**dadurch gekennzeichnet,**
**dass** das Werkstück nach dem Weiterlaminieren im Laminator in einen Aushärteofen verbracht wird, in dem es einer Wärmebehandlung ohne Auflast unterzogen wird.

10. Verfahren nach mindestens einem der Ansprüche 1 bis 9,
**dadurch gekennzeichnet,**
**dass** die geringe Auflast einem spezifischen Flächendruck von ca. 20 mbar bis ca. 200 mbar, insbesondere ca. 50 mbar bis ca. 100 mbar entspricht.

## Claims

1. Method of laminating substantially board-like workpieces having at least one heat-activatable adhesive layer under the action of pressure and heat, especially for laminating photovoltaic modules, wherein one or more workpieces are introduced into a vacuum chamber of a vacuum laminating press having a pressing means which gas-tightly partitions the vacuum chamber and is arranged to be raised and lowered by means of pressure differences, the vacuum chamber is evacuated and, by admission of air into and/or pressurisation of that portion of the vacuum chamber not occupied by a workpiece, the pressing means is pressed against the workpiece and, as a result, the workpiece is directly or indirectly pressed against a plate forming an upper side and a lower side of the vacuum chamber, and process heat is introduced into the workpiece, by means of which process heat the adhesive layer is heated and thereby softened and, on reaching an activation temperature, activated under the action of a defined process load of the pressing means,
**characterised in that**
the workpiece, after being introduced into the vacuum chamber, is first subjected by the pressing means to a low load of from approximately 2 % to approximately 10 % of the defined process load, the workpiece at the same time being kept below the activation temperature of the adhesive layer, the low load is subsequently removed from the workpiece and the workpiece is then heated to the activation temperature of the adhesive layer and by means of the pressing means subjected to the process load.

2. Method according to claim 1,
**characterised in that**
before or during the application of the low load, the workpiece is heated to a preheat temperature at which the adhesive layer softens but which is below the activation temperature of the adhesive layer.

3. Method according to claim 2,
**characterised in that**
the heating is carried out in such a way that the adhesive layer in the workpiece is brought to a preheat temperature of from approximately 80°C to approximately 120°C, preferably from approximately 80°C to approximately 100°C.

4. Method according to at least one of claims 1 to 3,
**characterised in that**
the vacuum chamber is evacuated before or during the application of the low load to the workpiece.

5. Method according to claim 4,
**characterised in that**
before or during the application of the low load, the vacuum chamber is evacuated only to a preliminary vacuum, and only after the low load has been removed from the workpiece is the vacuum chamber fully evacuated before the pressing means applies the process load to the workpiece.

6. Method according to at least one of claims 1 to 5,
**characterised in that**
the workpiece is laminated at a process load having a specific surface pressure of above 1020 mbar, preferably from above 1500 mbar to approximately 2000 mbar.

7. Method according to claim 6,
**characterised in that**
the process load is applied to the workpiece when the adhesive layer thereof has reached a temperature of from approximately 70 % to approximately 100 % of its activation temperature.

8. Method according to at least one of claims 1 to 7,
**characterised in that**
the lamination of the workpiece in the vacuum laminating press is interrupted once a first adhesive action of the adhesive layer has been produced, which first adhesive action air-tightly encapsulates the workpiece, and the workpiece is transferred to a downstream laminator where it is further laminated at a temperature at or above the activation temperature of the adhesive layer and under process load or under an increased load.

9. Method according to claim 8,
**characterised in that**
after the further lamination in the laminator, the workpiece is transferred to a curing oven in which it is subjected to a thermal treatment without load.

10. Method according to at least one of claims 1 to 9,
**characterised in that**
the low load corresponds to a specific surface pressure of from approximately 20 mbar to approximately 200 mbar, especially from approximately 50 mbar to approximately 100 mbar.

## Revendications

1. Procédé de stratification de pièces substantiellement en forme de plaques comportant au moins une couche d'adhésif thermoactivable sous l'effet de la pression et de la chaleur, en particulier de modules photovoltaïques, dans lequel une ou plusieurs pièce(s) est (sont) introduite(s) dans une chambre à vide d'une presse de stratification sous vide, à l'aide d'un moyen à pression de contact qui scinde ladite chambre à vide avec étanchéité aux gaz, et peut être soulevé et abaissé par des différences de pression, une dépression est ensuite créée dans ladite chambre à vide, puis ledit moyen à pression de contact est mis en applique contre la pièce par ventilation et/ou pressurisation de la partie de ladite chambre à vide qui ne renferme aucune pièce, ladite pièce étant ainsi plaquée directement ou indirectement contre un panneau formant des faces supérieure et inférieure de ladite chambre à vide, ladite pièce recevant de la chaleur de processus sous l'effet de laquelle la couche d'adhésif est chauffée et se ramollit en conséquence, puis est activée lorsqu'une température d'activation est atteinte, sous l'action d'une charge de processus bien définie imposée par ledit moyen à pression de contact,
**caractérisé par le fait**
**qu'**à l'issue de l'introduction dans la chambre à vide, la pièce est tout d'abord sollicitée, par le moyen à pression de contact, par une faible charge représentant d'environ 2 % à environ 10 % de la charge de processus bien définie, ladite pièce étant alors simultanément maintenue en deçà de la température d'activation de la couche d'adhésif ; par le fait que la faible charge, imposée à ladite pièce, est relâchée au stade successif ; et par le fait que ladite pièce est ensuite chauffée jusqu'à ladite température d'activation de ladite couche d'adhésif, et est sollicitée par ladite charge de processus à l'aide dudit moyen à pression de contact.

2. Procédé selon la revendication 1,
**caractérisé par le fait**
**que**, préalablement à l'imposition ou lors de l'imposition de la faible charge, la pièce est chauffée jusqu'à une température de préchauffage à laquelle la couche d'adhésif se ramollit, mais qui est toutefois inférieure à la température d'activation de ladite couche d'adhésif.

3. Procédé selon la revendication 2,
**caractérisé par le fait**
**que** le chauffage est effectué de façon telle que la couche d'adhésif soit portée, dans la pièce, à une température de préchauffage d'environ 80 °C à environ 120 °C, de préférence d'environ 80 °C à environ 100 °C.

4. Procédé selon au moins l'une des revendications 1 à 3,
**caractérisé par le fait**
**qu'**une dépression est créée, dans la chambre à vide, préalablement à l'imposition ou lors de l'imposition de la faible charge à la pièce.

5. Procédé selon la revendication 4,
**caractérisé par le fait**
**qu'**une dépression, n'atteignant qu'un vide partiel, est créée dans la chambre à vide préalablement à l'imposition ou lors de l'imposition de la faible charge, et ladite chambre à vide n'est soumise à une dépression totale qu'après relâchement de la faible charge imposée à la pièce, avant que le moyen à pression de contact n'impose la charge de processus à ladite pièce.

6. Procédé selon au moins l'une des revendications 1 à 5,
**caractérisé par le fait**
**que** la pièce est stratifiée sous l'action d'une charge de processus présentant une pression superficielle spécifique supérieure à 1 020 mbar et excédant, de préférence, 1 500 mbar à environ 2 000 mbar.

7. Procédé selon la revendication 6,
**caractérisé par le fait**
**que** la charge de processus est imposée à la pièce lorsque la couche d'adhésif de cette dernière a atteint une température représentant d'environ 70 % à environ 100 % de la température d'activation de ladite couche.

8. Procédé selon au moins l'une des revendications 1 à 7,
**caractérisé par le fait**
**que** la stratification de la pièce, dans la presse de stratification sous vide, est interrompue après instauration d'un premier effet d'adhésion de la couche d'adhésif encapsulant ladite pièce avec étanchéité à l'air, puis ladite pièce est transférée à un stratificateur implanté en aval, dans lequel sa stratification se poursuit à une température représentant ou excédant la température d'activation de ladite couche d'adhésif, ainsi que sous l'action d'une charge de processus ou d'une charge accrue.

9. Procédé selon la revendication 8,
**caractérisé par le fait**
**qu'**à l'issue de la poursuite de la stratification dans le stratificateur, la pièce est transférée à un four de durcissement dans lequel elle est soumise à un traitement thermique sans charge.

10. Procédé selon au moins l'une des revendications 1 à 9,
**caractérisé par le fait**
**que** la faible charge correspond à une pression superficielle spécifique d'environ 20 mbar à environ 200 mbar, en particulier d'environ 50 mbar à environ 100 mbar.
